# EUROPEAN PATENT APPLICATION

(11) **EP 4 844 375 A1**
(43) Date of publication of application: **25.11.2026**
(21) Application number: 25178073.0
(22) Date of filing: 21.05.2025
(51) Int. Cl.: G01N 21/25, G01N 21/57, G01N 21/88

(54) **LIGHTING ASSEMBLY AND LIGHT BOOTH COMPRISING THE LIGHTING ASSEMBLY**

(71) Applicant: X-Rite Europe GmbH, 8105 Regensdorf (CH)
(72) Inventor: Sanchez Laforet, Albert, CH-8105 Regensdorf (CH)
(74) Representative: Detken, Andreas

(57) **Abstract**

A lighting assembly (150) for a light booth or light table comprises planar, parallel, translucent first and second diffuser plates (161, 162) arranged at a distance along a vertical direction (z) that is perpendicular to the first and second diffuser plates (161, 162) and directed from the first diffuser plate (161) toward the second diffuser plate (162). First and second UV light sources (163, 164) are arranged between the diffuser plates (161, 162), each UV light source (163, 164) comprising a plurality of LEDs (166) that are configured to radiate ultraviolet light in an oblique direction (D₁, D₂) having a horizontal component (H₁, H₂) parallel to the second diffuser plate (162) and a vertical component (V₁, V₂) in the vertical direction (z) toward the second diffuser plate. The horizontal components (H₁, H₂) of the first and second oblique directions (D₁, D₂) are antiparallel to each other. Also disclosed is a light booth that includes the lighting assembly.

## Description

### TECHNICAL FIELD

The present invention relates to a lighting assembly for a light booth or light table and to a light booth that comprises the lighting assembly.

### PRIOR ART

Light booths are widely used in quality control for visual color assessment, surface characterization and inspection for defects. Light booths are sometimes also referred to as light cabins, light boxes, light cabinets, viewing booths, color matching booths, color assessment cabinets, color matching cabinets, or the like. A light booth typically comprises a viewing chamber having a floor, a back wall and two side walls. The viewing chamber is open at the front. Its interior forms a viewing area of the light booth. A lighting assembly is arranged at the ceiling and/or walls of the viewing chamber to illuminate the viewing area with a plurality of light sources approximating a plurality of standard illuminants. The light sources may radiate light not only in the visible wavelength range, but also in the ultraviolet range to enable the evaluation of optical brighteners or other fluorescent components. Light tables are also known, in which a lighting assembly is arranged at a defined distance above a table top. In contrast to a light booth, a light table generally lacks side walls.

Conventional light booths and light tables face challenges in achieving uniform light distribution and eliminating reflections of individual light sources when assessing polished or reflective surfaces. Many designs place LEDs either exclusively on the sides, leading to uneven light diffusion and poor homogeneity, or directly on the ceiling, causing unwanted reflections of individual light sources on shiny surfaces. Ultraviolet illumination is often poorly integrated, resulting in suboptimal testing for optical brighteners.

### SUMMARY OF THE INVENTION

It is an object of the present invention to provide a lighting assembly for a light booth or light table that enables uniform illumination of the viewing area and integrates UV illumination in a favorable manner.

This object is achieved with a lighting assembly having the features of claim 1. Further embodiments of the invention are laid down in the dependent claims.

The present invention provides a lighting assembly comprising:
a planar translucent first diffuser plate;
a planar translucent second diffuser plate, the second diffuser plate being parallel and at a distance to the first diffuser plate, the first and second diffuser plates defining a vertical direction that is perpendicular to the first and second diffuser plates and directed from the first diffuser plate toward the second diffuser plate;
a first UV light source arranged between the first and second diffuser plates, the first UV light source comprising a plurality of LEDs that are configured to radiate ultraviolet light in a first oblique direction having a horizontal component parallel to the second diffuser plate and a vertical component in the vertical direction toward the second diffuser plate;
a second UV light source arranged between the first and second diffuser plates, the second UV light source comprising a plurality of LEDs that are configured to radiate ultraviolet light in a second oblique direction having a horizontal component parallel to the second diffuser plate and a vertical component in the vertical direction toward the second diffuser plate,
wherein the horizontal components of the first and second oblique directions are antiparallel to each other.

By arranging the UV light sources between two diffuser plates in an oblique orientation with horizontal components directed toward each other, point source reflections in the viewing area, which are a common issue with UV wavelengths, are reduced. Additionally, the UV light sources are mechanically protected by the diffuser plates. When a lighting panel that radiates light in the visible wavelength range is placed above the diffuser plates, this light passes through both diffuser plates and is thus diffused in a particularly homogeneous manner. Thereby, point source reflections in the visible wavelength range can be avoided even on polished surfaces.

In the present context, a plate is referred to as translucent if the plate allows light to pass through while diffusing the light so that objects behind the plate cannot be seen clearly. In the present context, ultraviolet (UV) light is understood to be light in the 100-400 nm wavelength range. Visible (VIS) light is understood to be light in the 400-700 nm wavelength range. The term "light source" is used to refer to an actual physical device that emits light (e.g., an LED or a cluster of LEDs), while the term "illuminant" is used to refer to a theoretical source of light with a certain spectral power distribution (e.g., one of the standard illuminants defined in ISO/CIE 11664-2:2022).

The first and second diffuser plates preferably have a distance of about 2 to 20 cm. The LEDs of the UV light sources are preferably arranged at a distance of about 1 to 20 cm from the second diffuser plate. The oblique directions in which the LEDs radiate their ultraviolet light preferably include an angle of about 20° to 80° with the vertical direction z, the optimum angle depending on the dimensions of the lighting assembly and the transmission and reflection properties of the diffuser plates. For typical dimensions, an angle of about 50° to 70° to the vertical direction (corresponding to an angle of about 20° to 40° to the horizontal direction) has proven to achieve optimal diffusion of the UV light. The first diffuser plate is preferably essentially rectangular, having four straight edges arranged at right angles. Likewise, the second diffuser plate is preferably essentially rectangular, having four straight edges arranged at right angles.

In advantageous embodiments, each of the first and second UV light sources comprises an LED strip, the LEDs of the LED strip being arranged in one or more rows. The rows are preferably straight and parallel to each other. Each LED strip preferably extends parallel to an edge of the second diffuser plate. The LED strips are preferably arranged at opposing edges of the second diffuser plate, leaving sufficient space between them to allow a maximum of light from a lighting panel above the first diffuser plate to pass through the second diffuser plate without being obstructed by the UV light sources.

Optionally, two additional UV light sources can be provided perpendicular to the first and second UV light sources. More specifically, the lighting arrangement may comprise a third UV light source arranged between the first and second diffuser plates, the third UV light source comprising a plurality of LEDs that are configured to radiate ultraviolet light in a third oblique direction having a horizontal component parallel to the second diffuser plate and a vertical component in the vertical direction toward the second diffuser plate, and a fourth UV light source arranged between the first and second diffuser plates, the fourth UV light source comprising a plurality of LEDs that are configured to radiate ultraviolet light in a fourth oblique direction having a horizontal component parallel to the second diffuser plate and a vertical component in the vertical direction toward the second diffuser plate, wherein the horizontal components of the third and fourth oblique directions are antiparallel to each other and perpendicular to the horizontal components of the first and second oblique directions. Each of the third and fourth UV light sources may comprise an LED strip extending parallel to an edge of the second diffuser plate. The first and second UV light sources may be arranged at opposing third and fourth edges of the second diffuser plate.

The first diffuser plate is preferably made of plastic to achieve efficient diffusion of visible light that is radiated from a lighting panel above the first diffuser plate. The second diffuser plate is preferably made of a mineral glass to allow UV light to pass through and to avoid UV-induced degradation of the second diffuser plate.

The lighting assembly may further comprise a top lighting panel arranged above the first and second diffuser plates with respect to the vertical direction and extending parallel to the first diffuser plate. In other words, the top lighting panel is arranged on a side of the first diffuser plate with respect to the vertical direction that is opposite to the second diffuser plate. The top lighting panel comprises a plurality of top light sources configured to radiate light in the vertical direction. Each of the top light sources may be formed by a cluster of LEDs. For example, the LEDs of each cluster may be arranged in one or more rows or in matrix form. Each cluster comprises one or more LEDs radiating light in the visible wavelength range. Optionally, each cluster may additionally comprise one ore more LEDs radiating light in the ultraviolet wavelength range. By activating one or more of the LEDs of each cluster, various illuminants can be realized or approximated. These illuminants may include one or more of the following standard illuminants: CIE D65 and D50 with or without UV, CIE A, CIE LED-B1 through B5, CWF LED, TL84 LED, U30 LED, U35 LED, and 3500K LED.

In advantageous embodiments, the top light sources are arranged in a two-dimensional array. Expressed mathematically, the top light sources are preferably arranged at the lattice points of a two-dimensional Bravais lattice. As it is well known, a two-dimensional Bravais lattice can be monoclinic (mp), orthorhombic (rectangular [op] or centered rectangular [oc]), tetragonal (tp) or hexagonal (hp). In particular, the arrangement of the VIS light sources may be rectangular.

The top lighting panel may further comprise at least one top LED strip extending in a horizontal direction parallel to the second diffuser plate. Preferably, two or more such top LED strips are provided. The top LED strips are preferably straight. They are preferably parallel to each other. Each top LED strip comprises at least one row of LEDs. The LEDs of each LED strip are preferably spaced with a center-to-center spacing along the horizontal direction that is smaller than the center-to-center spacing of the top light sources in the two-dimensional array, preferably by a factor of at least 2. The LEDs of the top LED strip preferably radiate visible light in the vertical direction. The top LED strips can be used to generate directional lighting in the visible wavelength range. This allows users to assess gloss, sparkles, surface textures, detect defects, and evaluate material qualities.

Also disclosed is a light booth comprising:
a viewing chamber having a floor, two side walls and a rear wall, the viewing chamber defining a viewing area; and
the lighting assembly as described herein, the lighting assembly being arranged above the viewing chamber to illuminate the viewing area.

The lighting assembly may comprise a frame to which the first and second diffuser plates and the first and second UV light sources are mounted to form a subassembly. The subassembly may be pivotably held in the light booth or may be removable from the light booth as a unit to expose the lighting panel from below. This enables more efficient directional lighting from the lighting panel without the diffuser plates. This provides flexibility for switching between fully diffused lighting for color assessment and directional lighting for defects and texture evaluations.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a light booth;
- Fig. 2: shows, in a highly schematic manner, a lighting assembly in a cross section;
- Fig. 3: shows a top lighting panel in a bottom view;
- Fig. 4: shows a subassembly in a first perspective view:
- Fig. 5: shows the subassembly in a second perspective view;
- Fig. 6: shows a portion of the light booth in a partially disassembled state;
- Fig. 7: shows a schematic partial view of a UV light source; and
- Fig. 8: schematically illustrates a lighting assembly comprising four UV light sources in a top view.

### DESCRIPTION OF PREFERRED EMBODIMENTS

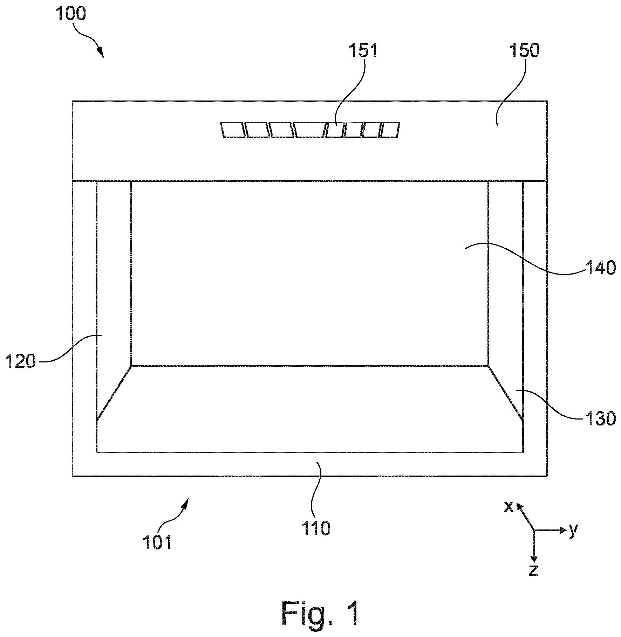

Fig. 1 illustrates a light booth 100. The light booth 100 comprises a viewing chamber 101 comprising a floor 110, a left side wall 120, a right side wall 130 and a rear wall 140. At the top, the viewing chamber 101 is closed by a lighting assembly 150.

A depth direction x, a width direction y and a vertical direction z can be defined as indicated in Fig. 1. The vertical direction z points from the lighting assembly 150 downwards towards the floor 110.

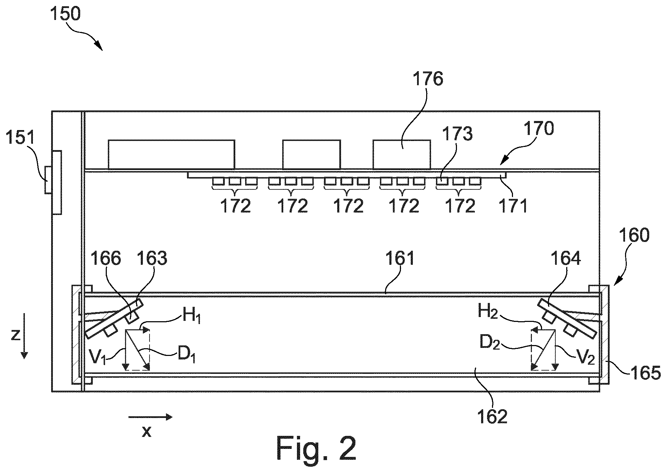

Fig. 2 illustrates, in a highly schematic manner, the setup of a lighting assembly 150. The lighting assembly 150 comprises at its top a lighting panel 170 comprising a plurality of top light sources 172 mounted on a circuit board (PCB) 171. Each top light source 172 comprises a plurality of LEDs 173, which are configured to radiate visible (VIS) light and, optionally, ultraviolet (UV) light with different spectral distributions. Each LED may be configured to approximate a predefined standard illuminant, or several LEDs may together approximate one or more standard illuminants. Each LED 173 radiates its light in the vertical direction z. Expressed more precisely, each LED radiates light with a radiant intensity distribution that has its maximum along the z direction. Electronic circuitry 176 for controlling and driving the LEDs is provided on the opposite side of the circuit board 171.

The lighting assembly 150 further comprises a subassembly 160, which is arranged below the lighting panel 170 with respect to the z direction. The subassembly 160 comprises a rectangular first diffuser plate 161, a rectangular second diffuser plate 162, a first UV light source 163 arranged near one edge of the diffuser plates, and a second UV light source 164 arranged near the opposite edge. These components are fixedly held in a rectangular frame 165. The subassembly 160 can be removed from the lighting panel 150 as a unit to expose the lighting panel 170 from below.

The first diffuser plate 161 is made of a transparent or translucent polymer plastic such as polycarbonate. Other plastic materials may be used. The first diffuser plate 161 is planar and translucent for visible light. At least one of the surfaces of the first diffuser plate 161 may be patterned, in particular, roughened to make the first diffuser plate 161 translucent rather than transparent. The first diffuser plate 161 acts to diffuse the visible light received from the lighting panel 170 above.

The second diffuser plate 162 is made of a UV-transparent mineral glass such as fused silica glass or borosilicate glass. The second diffuser plate 162 is planar and translucent for both visible light and ultraviolet light. At least one of its surfaces may be patterned, in particular, roughened ("frosted") to make it translucent rather than transparent. The second diffuser plate 162 acts to further diffuse the visible light received from the lighting panel 170 through the first diffuser plate 161 and to diffuse the ultraviolet light received from the UV light sources 163, 164.

The first and second UV light sources 163, 164 are arranged between the first and second diffuser plates 161, 162 near their edges and are laterally surrounded by the frame 165. Each UV light source 163, 164 comprises a plurality of LEDs 166 configured to radiate ultraviolet (UV) light, the LEDs being mounted on a circuit board. The LEDs of the first UV light source 163 radiate their ultraviolet light in a first oblique direction D₁, while the LEDs of the second UV light source 164 radiate their ultraviolet light in a second oblique direction D₂. Expressed more precisely, the LEDs of each UV light source radiate ultraviolet light with a radiant intensity distribution that has its maximum along the respective oblique direction D₁ or D₂, respectively. Each oblique direction D₁, D₂ has a horizontal component H₁, H₂ in a direction parallel to the second diffuser plate 162 (in the present example, in the depth direction x) and a downward vertical component V₁, V₂ in the vertical direction z. The horizontal components H₁ and H₂ are antiparallel to each other. The oblique directions D₁, D₂ include a non-zero angle with the vertical direction z. In a practical example, this angle may be about 60°. However, the angle may also differ from this value depending on the dimensions of the lighting assembly and the transmission and reflection properties of the diffuser plates.

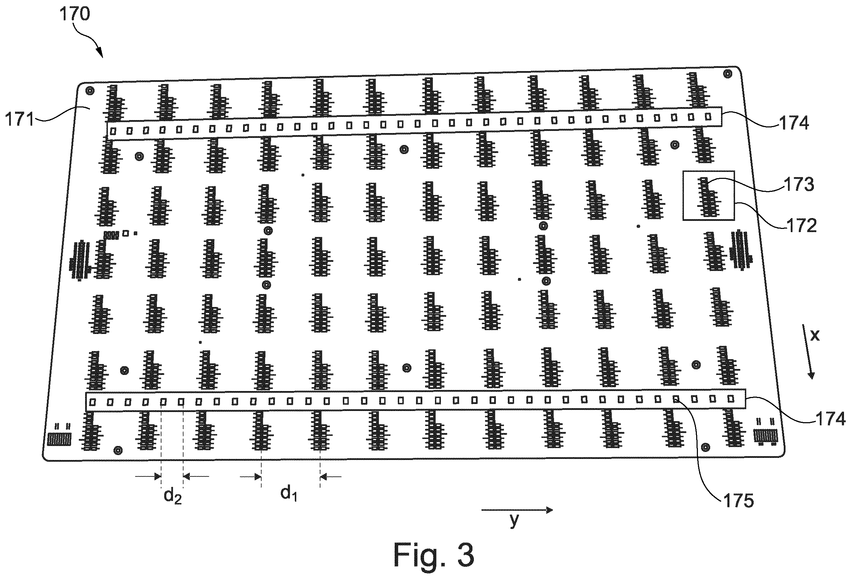

Fig. 3 illustrates an embodiment of a top lighting panel 170 in greater detail. The lighting panel 170 comprises a circuit board 171, on which a plurality of top light sources 172 are arranged. Each top light source 172 comprises a cluster of LEDs 173 configured to radiate different spectral distributions of light in the visible and, optionally, ultraviolet wavelength ranges. The LEDs 173 of each top light source are arranged in two narrowly spaced parallel rows extending along the x direction. The top light sources 172 are arranged in a rectangular array, being regularly spaced along both the x and y directions. In the y direction, their center-to-center spacing is designated as d₁. The lighting panel 170 further comprises two LED strips 174 that extend parallel to each other in the y direction at a distance from each other. Each LED strip 174 comprises a plurality of LEDs 175 that are arranged in a row. The LEDs 175 of each LED strip 174 are regularly spaced in the y direction with a center-to-center spacing d₂. The spacing d₂ is smaller than the spacing d₁. Like the LEDs 173 of the top light sources 172, also the LEDs 175 of the LED strips 174 radiate visible light in the vertical direction z.

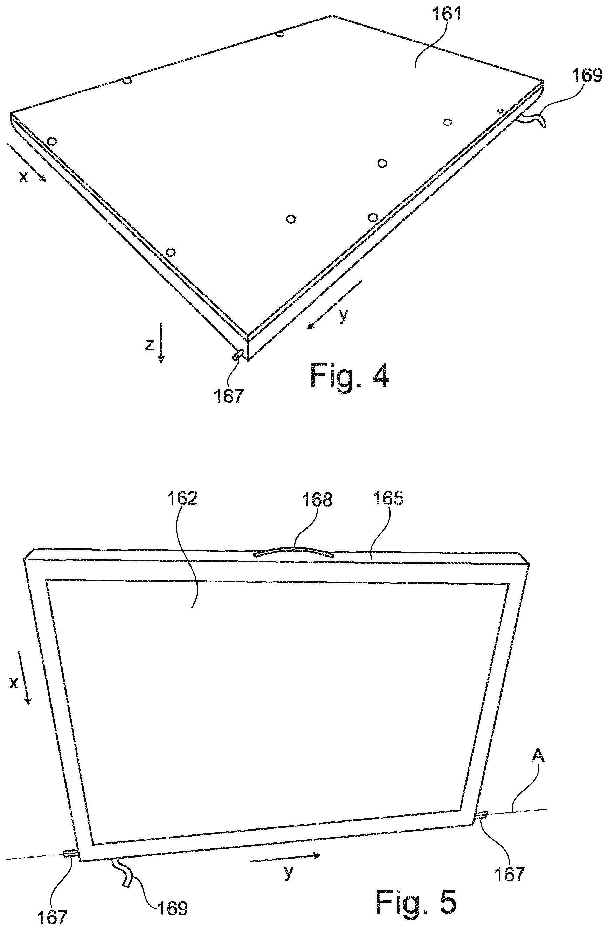

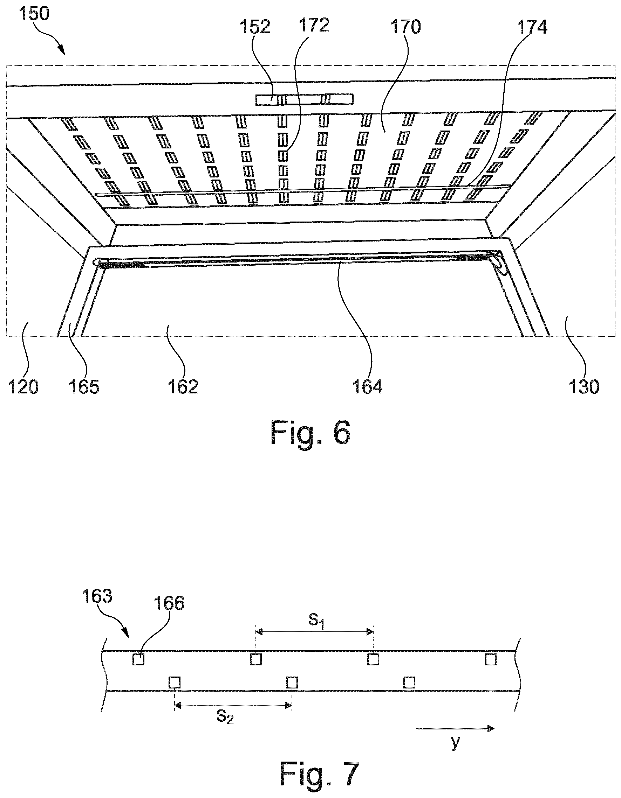

Figures 4 and 5 illustrate the subassembly 160. The first and second diffuser plates 161, 162 are fixedly mounted to the frame 165 and held at a defined distance by the frame 165. A cable 169, which may connect the UV light sources to the top lighting panel 170, provides electric power and synchronization to the LEDs of the UV light sources 163, 164 inside the subassembly 160. Two cylindrical pins 167 project from the frame in the positive and negative y direction, being aligned along a common horizontal axis A. A spring tab 168 projects toward the front in the negative x direction. The subassembly 160 can be removably held in the light booth 100 below the top lighting panel 170 using the pins 167 and the spring tab 168. In particular, the pins 167 can be received in pin-receiving recesses of the side walls 120, 130 so that the subassembly can pivot about the horizontal axis A. The spring tab 168 can interact with a corresponding cutout 152 in a front cover of the lighting assembly 150 (see Fig. 6).

Fig. 6 illustrates a portion of the light booth 100 in a partially disassembled state. The subassembly 160 is pivotably held between the side walls 120, 130 and has been pivoted downward to expose the lighting panel 170 from below. The first diffuser plate 161 has been removed from the subassembly 160, exposing the interior of the subassembly 160. In particular, the second UV light source 164 can be clearly seen.

Fig. 7 schematically illustrates the arrangement of LEDs in the first UV light source 163. As apparent from this view, each UV light source comprises a plurality of LEDs 166 aligned to form an LED strip. In the present example, the LEDs 166 of each UV light source are arranged in two parallel rows extending parallel to an edge of the second diffuser plate 162 along the y direction, the two parallel rows having different spacings s₁, s₂ between their respective LEDs along the y direction. However, other arrangements of the LEDs are possible. For example, one single row of LEDs or two or more equally spaced rows may be provided. The second UV light source 164 has a similar setup.

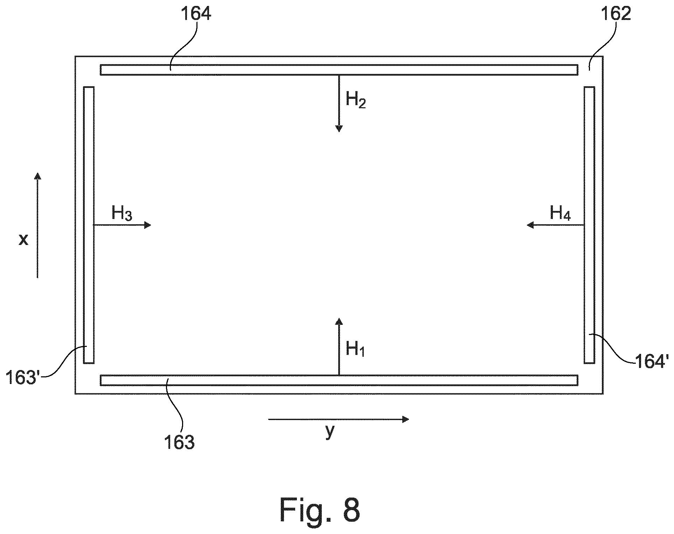

Fig. 8 schematically illustrates a lighting assembly comprising optional third and fourth UV light sources 163', 164' in addition to the first and second UV light sources 163, 164. Like the first and second UV light sources 163, 164, also the third and fourth UV light sources 163', 164' are arranged between the first and second diffuser plates 161, 162, and each UV light source 163', 164' comprises a plurality of LEDs 166 configured to radiate ultraviolet (UV) light and aligned to form an LED strip. While the LEDs of the first and second UV light sources 163, 164 are aligned along the y direction, the LEDs of the third and fourth UV light sources 163', 164' are aligned along the x direction. The LEDs of the third UV light source 163' radiate their ultraviolet light in a third oblique direction, while the LEDs of the fourth UV light source 164' radiate their ultraviolet light in a fourth oblique direction. Each of these oblique directions has a horizontal component H₃, H₄ in a direction parallel to the second diffuser plate 162 and a downward vertical component in the vertical direction z. The horizontal components H₃, H₄ associated with the third and fourth UV light sources 163', 164' are antiparallel to each other and perpendicular to the horizontal components H₁, H₂ associated with the first and second UV light sources 163, 164.

In summary, an LED-based light booth for enhanced material and color assessment is provided, utilizing a specially designed LED lighting assembly for both diffusive and directional lighting. The lighting assembly features multiple illuminants, including VIS LEDs positioned at a top surface and UV LEDs positioned with specific tilting at the edges of the lighting assembly, as well as a dual optical diffuser. This design ensures highly homogenous and diffused lighting across various applications, with no visible point sources, even on polished surfaces, with an option to create directional lighting.

The booth can be used in industries such as textiles, automotive, paint and plastics, print and packaging, and other manufacturing sectors where precise color and material assessments are critical. The design ensures consistent light quality across all illuminants for reliable evaluations of color and surface properties.

### LIST OF REFERENCE SIGNS

- 100: light booth
- 101: interior
- 110: floor
- 120: left side wall
- 130: right side wall
- 140: rear wall
- 150: lighting assembly
- 151: button
- 152: cutout
- 160: removable unit
- 161: first diffuser plate
- 162: second diffuser plate
- 163: first UV light source
- 164: second UV light source
- 163': third UV light source
- 164': fourth UV light source
- 165: frame
- 166: LED
- 167: pin
- 168: spring tab
- 170: lighting panel
- 171: circuit board
- 172: top light source
- 173: LED
- 174: LED strip
- 175: LED
- 176: electronic circuitry

## Claims

1. A lighting assembly (150) comprising:
a planar translucent first diffuser plate (161);
a planar translucent second diffuser plate (162), the second diffuser plate (162) being parallel and at a distance to the first diffuser plate (161), the first and second diffuser plates (161, 162) defining a vertical direction (z) that is perpendicular to the first and second diffuser plates (161, 162) and directed from the first diffuser plate (161) toward the second diffuser plate (162);
a first UV light source (163) arranged between the first and second diffuser plates (161, 162), the first UV light source (163) comprising a plurality of LEDs (166) that are configured to radiate ultraviolet light in a first oblique direction (D₁) having a horizontal component (H₁) parallel to the second diffuser plate (162) and a vertical component (V₁) in the vertical direction (z) toward the second diffuser plate (162);
a second UV light source (164) arranged between the first and second diffuser plates (161, 162), the second UV light source (164) comprising a plurality of LEDs (166) that are configured to radiate ultraviolet light in a second oblique direction (D₂) having a horizontal component (H₂) parallel to the second diffuser plate (162) and a vertical component (V₂) in the vertical direction (z) toward the second diffuser plate (162),
wherein the horizontal components (H₁, H₂) of the first and second oblique directions (D₁, D₂) are antiparallel to each other.

2. The lighting assembly (150) of claim 1, wherein each of the first and second UV light sources (163, 164) comprises an LED strip extending parallel to an edge of the second diffuser plate (162).

3. The lighting assembly (150) of claim 2, wherein the first and second UV light sources (163, 164) are arranged at opposing first and second edges of the second diffuser plate (162).

4. The lighting assembly of any one of the preceding claims, further comprising:
a third UV light source (163') arranged between the first and second diffuser plates (161, 162), the third UV light source (163') comprising a plurality of LEDs (166) that are configured to radiate ultraviolet light in a third oblique direction having a horizontal component (H₃) parallel to the second diffuser plate (162) and a vertical component in the vertical direction (z) toward the second diffuser plate (162);
a fourth UV light source (164') arranged between the first and second diffuser plates (161, 162), the fourth UV light source (164') comprising a plurality of LEDs (166) that are configured to radiate ultraviolet light in a fourth oblique direction having a horizontal component (H₄) parallel to the second diffuser plate (162) and a vertical component in the vertical direction (z) toward the second diffuser plate (162),
wherein the horizontal components (H₃, H₄) of the third and fourth oblique directions are antiparallel to each other and perpendicular to the horizontal components (H₁, H₂) of the first and second oblique directions (D₁, D₂).

5. The lighting assembly (150) of any one of the preceding claims,
wherein the first diffuser plate (161) is made of plastic, and
wherein the second diffuser plate (162) is made of a mineral glass.

6. The lighting assembly (150) of any one of the preceding claims, further comprising a top lighting panel (170) arranged above the first and second diffuser plates (161, 162) with respect to the vertical direction (z) and extending parallel to the first diffuser plate (161), the top lighting panel (170) comprising a plurality of top light sources (172) configured to radiate visible light in the vertical direction (z), each top light source (172) comprising a cluster of LEDs (173).

7. The lighting assembly (150) of claim 6, wherein the top light sources (172) are arranged in a two-dimensional array.

8. The lighting assembly (150) of claim 7, wherein the lighting panel (170) further comprises at least one LED strip (174) extending in a horizontal direction parallel to the second diffuser plate (162), the LED strip (174) comprising a plurality of LEDs (175) configured to radiate visible light in the vertical direction (z).

9. The lighting assembly (15) of claim 8,
wherein the top light sources (172) are regularly spaced along the horizontal direction (y) with a first center-to-center spacing (d₁), and
wherein the LEDs (175) of the LED strip are regularly spaced along the horizontal direction (y) with a second center-to-center spacing (d₂) that is smaller than the first center-to-center spacing (d₁).

10. A light booth (100) comprising:
a viewing chamber (101) having a floor (110), two side walls (120, 130) and a rear wall (140), the viewing chamber (101) defining a viewing area; and
the lighting assembly (150) of any one of the preceding claims, the lighting assembly (150) being arranged above the viewing chamber (101) to illuminate the viewing area.

11. The light booth (100) of claim 10, wherein the lighting assembly (150) comprises a frame (165), wherein the first and second diffuser plates (161, 162) and the first and second UV light sources (163, 164) are mounted to the frame (165) to form a subassembly (160), the subassembly (160) being pivotably held in the light booth (100) or being removable from the light booth (100) as a unit.
